(19) Europäisches Patentamt
European Patent Office
Office européen des brevets

(11) **EP 4 703 338 A1**

(12) **EUROPEAN PATENT APPLICATION**
published in accordance with Art. 153(4) EPC

(43) Date of publication:
04.03.2026 Bulletin 2026/10

(21) Application number: 24797045.2

(22) Date of filing: 24.04.2024

(51) International Patent Classification (IPC):
*C05G 5/30* (2020.01)    *B01J 2/00* (2006.01)
*B01J 2/30* (2006.01)    *C05F 11/00* (2006.01)
*C05G 3/00* (2020.01)

(52) Cooperative Patent Classification (CPC):
B01J 2/00; B01J 2/30; C05F 11/00; C05G 3/00;
C05G 5/30

(86) International application number:
PCT/JP2024/016020

(87) International publication number:
WO 2024/225299 (31.10.2024 Gazette 2024/44)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.04.2023  JP 2023074671
16.06.2023  JP 2023099249

(71) Applicant: **Central Glass Company, Limited**
Ube-shi, Yamaguchi 755-0001 (JP)

(72) Inventors:
• **NOMURA Yusuke**
**Tokyo 101-0054 (JP)**
• **KONAKAZAWA Masahiro**
**Tokyo 101-0054 (JP)**

(74) Representative: **Mewburn Ellis LLP**
**Aurora Building**
**Counterslip**
**Bristol BS1 6BX (GB)**

(54) **COATED FERTILIZER, METHOD FOR PRODUCING COATED FERTILIZER, AND COMPOSITION FOR COATING FERTILIZER**

(57)    A coated fertilizer containing a water-soluble granular fertilizer and a coating film covering the water-soluble granular fertilizer in which the coating film contains a salt of a fatty acid having 20 or more carbon atoms and a wax.

*FIG.1*

**Description**

TECHNICAL FIELD

The present disclosure relates to a coated fertilizer, a method for producing a coated fertilizer, and a composition for coating a fertilizer.

BACKGROUND ART

In the related art, in view of the influence on the environment due to running of the fertilizing components of water-soluble fertilizers, the labor saving associated with the increase in the age of the agriculture workers, and the like, a labor-saving and more efficient fertilizer and a method of using the fertilizer are required. Under such a background, various controlled-release granular fertilizers have been proposed and put into practical use.

One aspect of the controlled-release granular fertilizers is a coated fertilizer. A coated fertilizer is a fertilizer obtained by coating a surface of a water-soluble fertilizer with a film formed by stacking layers of an organic or inorganic coating material to control the elution time of the internal fertilizing component. In order to control the elution time of the fertilizing component, various types of coating materials have been studied.

Patent Literature 1 describes a coated granular fertilizer having a coating film formed of a coating material containing a resin and talc having high-purity.

Patent Literature 2 describes a coated fertilizer coated by sulfur and a sulfur-modifying agent containing an alicyclic unsaturated hydrocarbon compound.

Moreover, Patent Literature 1 describes a coated fertilizer obtained by coating a water-soluble fertilizer with a calcium salt layer of stearic acid and a paraffin wax layer in the order.

BACKGROUND ART LITERATURE

PATENT LITERATURE

    Patent Literature 1: JP2019-156681A
    Patent Literature 2: JP2007-084414A

NON-PATENT LITERATURE

Non-Patent Literature 1: Ebtisam K. Heikal, Salah A. Khalil "Coating Potassium Nitrate and Urea Fertilizers by some Organic and Inorganic Materials to Improve their Dissolution and Releasing Characteristics", AMSE JOURNALS -2015-Series: Modelling C; Vol. 76;N° 1 ; pp 33-45

SUMMARY OF INVENTION

TECHNICAL PROBLEM

However, as a result of attempting to coat a water-soluble fertilizer using a stearate, it was found that when wax or stearic acid is additionally supplied to the surface of the formed coating film of the stearate, the particles during rolling form an agglomerate that cannot be crushed without additional external force, and issues such as layering failure tend to occur. When the layering failure as described above occurs, it is difficult to stack the coating material, and thus the degree of freedom of coating design is limited.

An object of the present disclosure is to provide a coated fertilizer in which layering failure is suppressed.

SOLUTION TO PROBLEM

In the coated fertilizer of the present disclosure, the above problems can be solved by using a coating film containing a salt of a fatty acid having 20 or more carbon atoms and a wax. More specifically, the above problems can be solved by the following configuration.

    <1> A coated fertilizer containing a water-soluble granular fertilizer and a coating film covering the water-soluble granular fertilizer,

in which the coating film contains a salt of a fatty acid having 20 or more carbon atoms and a wax.

<2> The coated fertilizer according to <1>, in which the salt of the fatty acid contains a salt of a fatty acid having 31 or more carbon atoms.

<3> The coated fertilizer according to <1> or <2>, in which the salt of the fatty acid contains at least one of a salt of a dimer acid and a salt of a trimer acid.

<4> The coated fertilizer according to any one of <1> to <3>, in which the salt of the fatty acid contains a salt of a fatty acid having at least one of a branched structure and a ring structure.

<5> The coated fertilizer according to any one of <1> to <4>, in which the wax contains at least one of a petroleum-based wax or a plant-based wax.

<6> The coated fertilizer according to any one of <1> to <5>, in which the coating film includes at least one layer and includes at least one layer containing the salt of the fatty acid and the wax.

<7> The coated fertilizer according to any one of <1> to <6>, in which the coating film includes at least one layer and contains the salt of the fatty acid and the wax in a layer present at a position closest to the water-soluble granular fertilizer.

<8> The coated fertilizer according to any one of <1> to <7>, in which the coating film includes at least four layers and includes at least four layers containing the salt of the fatty acid and the wax.

<9> The coated fertilizer according to any one of <1> to <8>, in which fertilizer moisture permeability of the coating film at 40°C is 52 g/(m$^2$·24 h) or less.

<10> The coated fertilizer according to any one of <1> to <9>, in which the coating film does not contain a resin.

<11> A method for producing a coated fertilizer containing a water-soluble granular fertilizer and a coating film covering the water-soluble granular fertilizer, including
forming a coating film containing a salt of a fatty acid having 20 or more carbon atoms and a wax on the water-soluble granular fertilizer.

<12> The method for producing a coated fertilizer according to <11>, in which the coating film includes at least one layer containing the salt of the fatty acid and the wax, and the following steps 1 to 3 are performed in this order:

step 1: a step of bringing the water-soluble granular fertilizer into a flowing state or a rolling state in a coating apparatus;
step 2: a step of supplying the fatty acid having 20 or more carbon atoms and the wax into the coating apparatus; and
step 3: a step of supplying a metal hydroxide into the coating apparatus, allowing to react the fatty acid with the metal hydroxide to produce the salt of the fatty acid having 20 or more carbon atoms and forming a layer containing the salt of the fatty acid and the wax.

<13> The method for producing a coated fertilizer according to <12>, in which the step 2 and step 3 are each repeated once or more after completing the step 3.

<14> The method for producing a coated fertilizer according to <12> or <13>, in which the step 2 includes a step 2a of supplying the fatty acid and the wax to a surface of the water-soluble granular fertilizer.

<15> The method for producing a coated fertilizer according to any one of <12> to <14>, where four cycles or more are performed, each cycle including the step 2 and step 3 performed once in this order.

<16> The method for producing a coated fertilizer according to any one of <12> to <15>, in which the fatty acid contains a fatty acid having 31 or more carbon atoms.

<17> The method for producing a coated fertilizer according to any one of <12> to <16>, in which the fatty acid contains at least one of a dimer acid and a trimer acid.

<18> A composition for coating a fertilizer, the composition containing a salt of a fatty acid having 20 or more carbon atoms and a wax.

<19> The composition for coating a fertilizer according to <18>, in which the salt of the fatty acid contains a salt of a fatty acid having 31 or more carbon atoms.

<20> The composition for coating a fertilizer according to <18> or <19>, in which the salt of the fatty acid contains at least one of a salt of a dimer acid and a salt of a trimer acid.

<21> A mixed fertilizer containing the coated fertilizer according to any one of <1> to <10> and another fertilizer.

<22> The mixed fertilizer according to <21>, in which the other fertilizer is at least one selected from the group consisting of a high-grade complex fertilizer, a nitrogen fertilizer, a phosphate fertilizer, a potash fertilizer, an organic fertilizer, a silicate fertilizer, and a magnesium fertilizer.

ADVANTAGEOUS EFFECTS OF INVENTION

According to the present disclosure, a coated fertilizer in which layering failure is suppressed can be provided.

BRIEF DESCRIPTION OF DRAWINGS

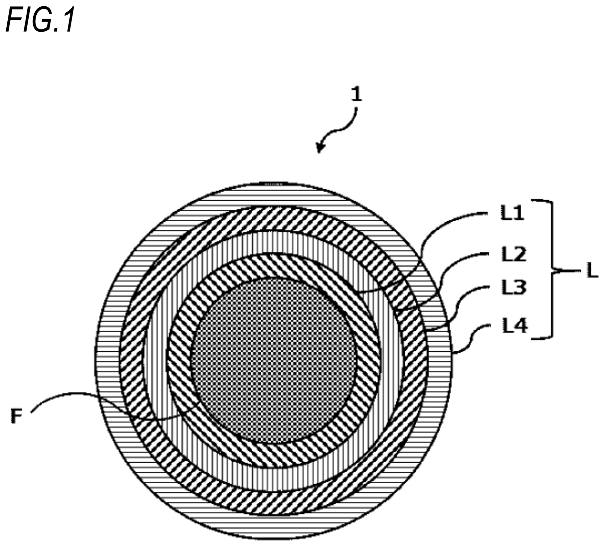

[FIG. 1] FIG. 1 is a schematic view showing a cross section of an example of a coated fertilizer.

DESCRIPTION OF EMBODIMENTS

Hereinafter, the present disclosure will be described in detail, but the description of the constituent elements described below is an example of an embodiment of the present disclosure, and the present disclosure is not limited to these specific contents. Various modifications can be made within the scope of the gist.

The term "to" in the present specification is used with the meanings including the numerical values indicated before and after "to" as a lower limit value and an upper limit value.

In the present specification, the period from the start of the elution test to the elapse of three days may be referred to as "initial period". The elution rate from the start of the elution test to the elapse of three days may be referred to as "initial elution".

(Layer)

In the present specification, the term "layer" refers to a state in which a raw material supplied for coating covers a particle to be coated (a water-soluble granular fertilizer or a coated water-soluble granular fertilizer) and is hardened or solidified. A state in which an additional raw material is supplied onto the existing layer, and the material is allowed to harden or solidify, may be referred to as "layering". The layering may have a boundary between the layers but does not have to have any boundary. In the present specification, when describing "a first layer", "a second layer", and the like, for example, the first layer refers to a layer obtained by hardening or solidifying a coating material derived from a raw material supplied first and may have a boundary in the layer but does not have to have any boundary, and the component ratio or the distribution of the components constituting the layer may be uniform or non-uniform.

(Layering Failure)

In the present specification, formation of the above-described agglomerates or generation of a large amount of blocking particles is referred to as layering failure.

The agglomerate is a mass of a visually observable size, and when an agglomerate is generated, it tends to be difficult to maintain the flowing state or the rolling state of the coated particles. The agglomerate can be often crushed into individual particles when an external force is applied thereto.

Blocking refers to a phenomenon in which a small number of particles are integrated while the flowing state or the rolling state can be maintained, and the blocking particles refer to particles in which blocking occurs. Since the particles integrated by blocking are solidified with a strong force, even when an external force is applied, the particles are often not crushed as easily as the agglomerates. The blocking particles are difficult to be observed during the production because the blocking particles are in a flowing state or a rolling state together with the particles having no blocking as long as the amount is small, but since fluidity is poor, on the other hand, when the amount is large, it becomes easy to visually observe the particles left on the surface layer of the particle group in the flowing state or the rolling state. Therefore, a case in which blocking particles are visually observed during the production is considered as layering failure. In addition, a case in which the blocking defect rate described later exceeds 20% may be considered as layering failure.

[1. Coated Fertilizer]

The coated fertilizer of the present disclosure is a coated fertilizer containing a water-soluble granular fertilizer and a coating film covering the water-soluble granular fertilizer in which the coating film contains a salt of a fatty acid having 20 or more carbon atoms and a wax.

The present inventors have conducted studies using salts of fatty acids having 18 or less carbon atoms and found that a layer containing a salt of a fatty acid having 18 or less carbon atoms is easily dissolved in a coating material of the next layer (for example, a fatty acid having 18 or less carbon atoms or a wax), or is easily swollen by taking in the coating material. It is presumed that, when the layer containing the salt of the fatty acid is dissolved in or swollen with the coating material of the next layer, the agglomerate described above is easily formed.

In addition, it has been newly found that the blocking described above is more likely to occur as the number of carbon atoms of the salt of the fatty acid increases even when the agglomerate is eliminated. Blocking occurs during hardening or solidification of the coating material and is difficult to crush once it occurs. The blocking particles cannot be used in a sprayer and thus are eventually removed. That is, when blocking is likely to occur, there is a problem that the yield becomes worse as the layers are stacked. As a result of further investigation, it has been found that when a wax is used in combination as the coating material, the blocking described above can be suppressed.

In addition, in the coated fertilizer of the present disclosure, the yield rate described later can be 50% or more. The yield rate is an index indicating the rate of defects included in the coating film, and the larger the value of the yield rate is, the more likely the initial elution tends to be suppressed. Therefore, the yield rate is preferably 50% or more, and more preferably 70% or more.

<Water-Soluble Granular Fertilizer>

The coated fertilizer of the present disclosure contains a water-soluble granular fertilizer. The water-soluble granular fertilizer is used as a fertilizing component. The water-soluble granular fertilizer is not particularly limited as long as the water-soluble granular fertilizer is water-soluble. Examples of the water-soluble granular fertilizer include urea, ammonium chloride, ammonium sulfate, ammonium nitrate, potassium chloride, potassium nitrate, sodium nitrate, potassium ammonium phosphate, ammonium phosphate, and ammonium phosphate lime, and urea is preferable. The water-soluble granular fertilizer may be a fertilizer using one kind selected from the above or may be a composite fertilizer using two or more kinds.

The water-soluble granular fertilizer may contain water-soluble or insoluble impurities or the like as long as the properties of the fertilizer are not significantly affected.

The size and the shape of the water-soluble granular fertilizer are not particularly limited, and those having a generally used size can be used. For example, the water-soluble granular fertilizer may be solid particles (for example, spherical, substantially spherical, rod-like, needle-like, rectangular, flat, or unformed), and the particle size by sieving is preferably 1.0 mm to 5.0 mm and may be more preferably 2.0 mm to 4.0 mm, in view of convenience when spraying over an agricultural field using an existing machine or the like.

A commercially available water-soluble granular fertilizer can be used, or the water-soluble granular fertilizer can also be produced, for example, by a known method such as an extrusion granulation method and a compression granulation method.

<Coating Film>

The coating film in the coated fertilizer of the present disclosure refers to the entire film covering the water-soluble granular fertilizer. The film on the water-soluble granular fertilizer may be in contact with the surface of the water-soluble granular fertilizer, or any film or layer may be interposed between the water-soluble granular fertilizer and the film. The surface of the coating film may have any particles or the like. In the present specification, the particles attached to the surface of the coating film after the formation of the coating film are not included in the coating film.

In the coated fertilizer of the present disclosure, the coating film includes at least one layer, preferably includes at least two layers, and more preferably includes at least four layers. The upper limit of the layer number constituting the coating film is not particularly limited but may be, for example, 100 or less or 50 or less.

In the present disclosure, when there are two or more layers covering the water-soluble granular fertilizer, the entire film including the two or more layers is referred to as the "coating film".

When there are two or more layers constituting the coating film, the layers may have different compositions or may all have the same composition. The term "composition" refers to the components contained in the layer and the contents thereof.

The coating film contains a salt of a fatty acid having 20 or more carbon atoms and a wax.

The fatty acid having 20 or more carbon atoms is also referred to as a "specific fatty acid", and a salt of the fatty acid having 20 or more carbon atoms is also referred to as a "salt of the specific fatty acid".

In all the salts of the fatty acids contained in the coating film, a salt of a fatty acid other than the salt of the specific fatty acid may be contained as long as various performances of the coating film are not significantly impaired, but the main component of the salt of the fatty acid contained in the coating film is desirably the salt of the specific fatty acid. The "main component" refers to the component that is most abundant of the salts of the fatty acids and may be, for example, a component with a content of 60% by mass or more when the total mass of the salts of the fatty acids contained in the coating film is 100% by mass. In addition, the main component may be preferably a component with a content of 75% by mass or more, more preferably a component with a content of 80% by mass or more, further preferably a component with a content of 85% by mass or more, and particularly preferably a component with a content of 90% by mass or more. The upper limit of the content of the main component is not particularly limited but may be, for example, 100% by mass or less, and preferably 98% by mass or less. When two or more kinds of salt of the specific fatty acid are contained, the total value thereof may be the "content of the salt of the specific fatty acid".

When there are two or more layers constituting the coating film, the salt of the specific fatty acid and the wax may be contained in the same layer or may be contained in different layers (that is, a layer contains the salt of the specific fatty acid but does not contain the wax, and another layer does not contain the salt of the specific fatty acid but contains the wax).

From the viewpoint of improving the yield rate of the coated fertilizer, improving the blocking defect rate, improving the initial elution, improving the fertilizer moisture permeability at 40°C, and the like, the coating film is preferably includes at least one layer and preferably has at least one layer containing the salt of the specific fatty acid and the wax.

The coating film more preferably includes at least four layers and more preferably includes at least four layers containing the salt of the specific fatty acid and the wax.

The coating film preferably includes at least one layer and preferably contains the salt of the specific fatty acid and the wax in the layer present at a position closest to the water-soluble granular fertilizer (the layer in contact with the surface of the water-soluble granular fertilizer).

FIG. 1 is a schematic view showing a cross section of an example of the coated fertilizer of the present disclosure.

A coated fertilizer 1 of FIG. 1 contains a water-soluble granular fertilizer F and a coating film L covering the water-soluble granular fertilizer F.

The coating film L includes four layers of a first layer L1, a second layer L2, a third layer L3, and a fourth layer L4 in order from the side closer to the water-soluble granular fertilizer F.

At least any one layer of the first layer L1, the second layer L2, the third layer L3, and the fourth layer L4 contains the salt of the specific fatty acid, and at least any one layer contains the wax.

Preferably, at least any one layer of the first layer L1, the second layer L2, the third layer L3, and the fourth layer L4 contains the salt of the specific fatty acid and the wax.

More preferably, the first layer L1 contains the salt of the specific fatty acid and the wax.

Particularly preferably, the first layer L1, the second layer L2, the third layer L3, and the fourth layer L4 contain the salt of the specific fatty acid and the wax.

Although the boundaries of the layers L1 to L4 are clearly illustrated in FIG. 1, the boundaries may be unclear. The thicknesses of the layers may be the same or different from each other.

The film thickness of the coating film can be appropriately changed according to a desired elution pattern but may be, for example, 10 $\mu$m to 250 $\mu$m, 30 $\mu$m to 200 $\mu$m, or 50 $\mu$m to 150 $\mu$m.

The total of the film thicknesses of the layers is regarded as the film thickness of the coating film.

The thickness of each layer constituting the coating film is not particularly limited and can be appropriately changed depending on the film thickness of the coating film but is preferably, for example, 5 $\mu$m to 30 $\mu$m from the viewpoint of ease of coating.

The total mass of the coating film is preferably 1.0 to 30% by mass, more preferably 2.0 to 25% by mass, and further preferably 3.0 to 20% by mass with respect to the total mass of the coated fertilizer.

The ratio of the total mass of the coating film to the total mass of the coated fertilizer is also referred to as a coating rate.

$$\text{Coating rate (\%)} = (\text{total mass of coating film/total mass of coated fertilizer}) \times 100$$

The fertilizer moisture permeability of the coating film at 40°C is preferably 52 $g/(m^2 \cdot 24\ h)$ or less.

The fertilizer moisture permeability indicates the sum of the ease of permeation of water in the coating film and the ease of permeation of urea dissolved in water (urea water) in the coating film. When the salt of the specific fatty acid in the coating film is the same, the smaller the value of the fertilizer moisture permeability, the higher the yield rate, and the more likely the initial elution tends to be suppressed. Further, the fertilizer moisture permeability may be more preferably 50 $g/(m^2 \cdot 24\ h)$ or less, further preferably 20 $g/(m^2 \cdot 24\ h)$ or less, or 10 $g/(m^2 \cdot 24\ h)$ or less.

<Other Optional Components>

The coated fertilizer of the present disclosure may have an optional material on the surface of the coating film for the purpose of preventing scratches or floating in water, preventing solidification, and the like. Examples thereof include talc, silica, and diatomaceous earth. These optional materials are applied to the surface of the coated fertilizer to adhere to the coating film. As it will be described later, the optional material may be mixed in the coating film as a component of the coating material.

In addition, the coated fertilizer of the present disclosure may contain an unreacted raw material (for example, a fatty acid such as the specific fatty acid, or a metal hydroxide), a reaction byproduct, or the like at the time of forming the coating film described later in the coating film.

Hereinafter, the components contained in the coating film will be described.

(Salt of Specific Fatty Acid)

As the salt of the specific fatty acid, a salt of a fatty acid having 20 or more carbon atoms is used. A salt of a fatty acid having 21 or more carbon atoms is preferably contained, and a salt of a fatty acid having 31 or more carbon atoms is more preferably contained. The main component of the salt of the fatty acid contained in the coating film is further preferably a salt of a fatty acid having 31 or more carbon atoms. The upper limit of the carbon atom number of the salt of the specific fatty acid is not particularly limited but may be, for example, 100 or less.

The salt of the specific fatty acid may be a salt of a monobasic acid, a salt of a dibasic acid, or a salt of a tribasic acid but preferably contains at least one of a salt of a dibasic acid and a salt of a tribasic acid. The salt of the specific fatty acid contained in the coating film may be one kind alone or two or more kinds.

The salt of the specific fatty acid preferably contains at least one of a salt of a dimer acid and a salt of a trimer acid.

More preferably, with respect to the total amount of the salts of the specific fatty acids contained in the coating film, 60% by mass or more in total may be at least one of a salt of a dimer acid and a salt of a trimer acid. Further preferably, at least a salt of a dimer acid may be contained in a total amount of 60% by mass or more, and further preferably, at least a salt of a dimer acid may be contained in a total amount of 70% by mass or more. The upper limit of the content of the salt of the dimer acid is not particularly limited but may be, for example, 100% by mass or less, 90% by mass or less, or 85% by mass or less.

The salt of the specific fatty acid preferably contains a salt of a fatty acid having at least one of a branched structure and a ring structure. When the specific fatty acid has the above structure, the specific fatty acid tends to be compatible with the wax, and the wax tends to be easily retained inside the salt of the fatty acid of the coating film, which is preferable. The main component of the salt of the fatty acid contained in the coating film is more preferably a salt of a fatty acid having at least one of a branched structure and a ring structure.

The branched structure refers to a structure in which at least one of the hydrogen atoms of the hydrocarbon chain of the fatty acid is replaced with carbon, and the ring structure refers to an annular body of a hydrocarbon.

The salt of the specific fatty acid may be a salt of a saturated fatty acid or a salt of an unsaturated fatty acid.

The salt of the specific fatty acid is preferably a salt of an aliphatic carboxylic acid having 20 or more carbon atoms.

The salt of the specific fatty acid is preferably a salt of a vegetable fatty acid having 20 or more carbon atoms.

Specific examples of the specific fatty acid of the salt of the specific fatty acid will be described later.

The salt of the specific fatty acid is preferably a metal salt of the specific fatty acid, and more preferably at least one of an alkali metal salt of the specific fatty acid and an alkaline earth metal salt of the specific fatty acid.

For example, the salt is further preferably at least one selected from the group consisting of a sodium salt of the specific fatty acid, a potassium salt of the specific fatty acid, a lithium salt of the specific fatty acid, a calcium salt of the specific fatty acid, and a magnesium salt of the specific fatty acid.

Since the salt of the specific fatty acid tends to be difficult to coat even when the salt itself of the specific fatty acid is supplied onto the water-soluble granular fertilizer, a salt obtained by the production method described later is used. Specifically, a coating film of the salt of the specific fatty acid can be obtained by reacting the specific fatty acid and a metal hydroxide on the water-soluble granular fertilizer. From the viewpoint of easily reacting with the specific fatty acid and forming the salt of the specific fatty acid, it is preferable to use calcium hydroxide as the metal hydroxide. That is, the salt of the specific fatty acid is particularly preferably a calcium salt of the specific fatty acid.

The content of the salt of the specific fatty acid is not particularly limited as long as a desired coating film can be obtained. For example, the content is preferably 1 to 99% by mass, more preferably 5 to 95% by mass, and further preferably 10 to 90% by mass with respect to the total mass of the coating film.

(Wax)

The wax is not particularly limited.

The wax is preferably liquid at a coating temperature, and a wax having a melting point of 45 to 100°C is more preferable. Examples thereof include petroleum-based waxes such as paraffin wax, plant-based waxes such as carnauba wax, polymer waxes such as polyethylene wax, hydrogenated oils such as palm hydrogenated oil and beef tallow hydrogenated oil, and synthetic ester waxes.

The wax preferably contains at least one of a petroleum-based wax and a plant-based wax. When the mass of all the waxes contained in the coating film is regarded as 100, the total content of the petroleum-based wax and the plant-based wax is more preferably 80% by mass or more, and all the waxes contained in the coating film are further preferably at least one of a petroleum-based wax and a plant-based wax.

The wax content is not particularly limited as long as an amount capable of suppressing layering failure is contained. For example, the content is preferably 1 to 40% by mass, more preferably 2.5 to 30% by mass, and further preferably 5 to 20% by mass with respect to the total mass of the coating film.

(Other Components)

The coating film may contain another component in the coating film in addition to the salt of the specific fatty acid and the wax.

Examples of the other component include resins, surfactants, talc, diatomaceous earth, silica, and sulfur powder. When these components are optional components in the coating film, the components can be taken into the coating film as the coating material is hardened or solidified by supplying the components before the coating material supplied into the coating apparatus is hardened or solidified.

The other component content may be 0 to 20% by mass or 0 to 10% by mass with respect to the total mass of the coating film.

The coating film may contain a resin (for example, polyethylene, polyester, acrylic resin, or polyurethane) but does not have to contain any resin, and from the viewpoint of reducing the environmental load, the coating film does not preferably contain any resin.

[2. Mixed Fertilizer]

The coated fertilizer of the present disclosure may be mixed with another fertilizer to prepare a mixed fertilizer. Examples of the other fertilizer include, but are not limited to, high-grade complex fertilizers such as NK and NPK compounds, nitrogen fertilizers such as ammonium chloride, ammonium sulfate, and urea, phosphate fertilizers such as monoammonium phosphate and diammonium phosphate, potash fertilizers such as potassium chloride and potassium silicate, organic fertilizers such as fish cake, meat bone powder, plant oil cake, and powder thereof, silicate fertilizers such as silica gel, and magnesium fertilizers such as magnesium ammonium phosphate.

[3. Production Method of Coated Fertilizer]

Hereinafter, the method for producing a coated fertilizer of the present disclosure will be described.

The method for producing a coated fertilizer of the present disclosure is a method for producing a coated fertilizer containing a water-soluble granular fertilizer and a coating film covering the water-soluble granular fertilizer which includes forming the coating film containing a salt of a fatty acid having 20 or more carbon atoms and a wax on the water-soluble granular fertilizer. The water-soluble granular fertilizer, the salt of the fatty acid having 20 or more carbon atoms (the salt of the specific fatty acid), and the wax are as described above.

Examples of the method for producing a coated fertilizer include the method 1 and the method 2 below, and the method 1 below is preferably included from the viewpoints of improving the yield rate of the coated fertilizer, improving the blocking defect rate, improving the initial elution, improving the fertilizer moisture permeability at 40°C, shortening the production time, and the like. In particular, the method 1 is suitable because blocking defects that tend to occur as the carbon atom number of the specific fatty acid increases can be improved.

<Method 1>

A method for producing a coated fertilizer in which the coating film has at least one layer containing a salt of a specific fatty acid and a wax, and the following steps 1 to 3 are performed in this order.

Step 1: a step of bringing a water-soluble granular fertilizer into a flowing state or a rolling state in a coating apparatus.

Step 2: a step of supplying a specific fatty acid and a wax into the coating apparatus.

Step 3: a step of supplying a metal hydroxide into the coating apparatus, reacting the specific fatty acid with the metal hydroxide to produce the salt of the specific fatty acid, and forming a layer containing the salt of the specific fatty acid and the wax.

<Method 2>

A method for producing a coated fertilizer in which the coating film has at least one layer A containing a salt of a specific fatty acid and at least one layer B containing a wax, and the following step 1, step a, and step b are performed in this order.

Step 1: a step of bringing a water-soluble granular fertilizer into a flowing state or a rolling state in a coating apparatus.

Step a: a step of supplying a specific fatty acid and a metal hydroxide into the coating apparatus, reacting the specific fatty acid with the metal hydroxide to produce the salt of the specific fatty acid, and forming the layer A.

Step b: a step of supplying a wax and the metal hydroxide into the coating apparatus, solidifying the wax, and forming the layer B on the surface of the layer A.

First, the method 1 will be described.

(Step 1)

The step 1 will be described.

In the step 1, the water-soluble granular fertilizer is brought into a flowing state or a rolling state in a coating apparatus. By bringing the water-soluble granular fertilizer into a flowing state or a rolling state, the uniformity of the film thickness of the coating film is improved.

The coating apparatus is not particularly limited, but an apparatus such as a rotating drum can be preferably used. In the step 1, the temperature in the apparatus may be maintained at about the coating temperature in advance, and the water-soluble granular fertilizer may be heated before the step 2. The coating temperature may be determined depending on the melting points of the specific fatty acid, the wax, and the water-soluble granular fertilizer used and is not particularly limited, but the coating temperature is, for example, 20 to 150°C, preferably 40 to 100°C. The coating temperature is the temperature at which the step 2 and the step 3 are performed. In addition, the humidity in the apparatus may be adjusted so as not to hinder the step 2 to the step 3 described later.

(Step 2)

The step 2 will be described.

In the step 2, the specific fatty acid and the wax are supplied into the coating apparatus. By the step 2, the specific fatty acid and the wax are supplied onto the water-soluble granular fertilizer in the flowing state or the rolling state.

When supplied into the coating apparatus in the step 2, the specific fatty acid and the wax are preferably liquid.

When the step 2 is performed, the water-soluble granular fertilizer is preferably maintained in the rolling state or the flowing state. Moreover, when the step 2 is performed, as in the step 1, heating is preferably performed in order to maintain the inside of the apparatus at the coating temperature.

The method for supplying the specific fatty acid and the wax is not particularly limited, and examples thereof include a spraying method and a dropping method, but the method is not limited thereto. In addition, an optional component (for example, water, a solvent, or various additives) may be contained as long as the solid state of the water-soluble granular fertilizer can be maintained and the compatibility between the specific fatty acid and the wax, the reactivity between the specific fatty acid and the metal hydroxide described later, and the like are not impaired.

The specific fatty acid and the wax may be each independently supplied or may be supplied after a part or all of the components are mixed in advance. When each independently supplied, the specific fatty acid and the wax may be supplied at the same timing, supplied sequentially, or supplied at different timings of starting supplying and a part thereof may be supplied simultaneously.

The step 2 preferably includes a step 2a of supplying the specific fatty acid and the wax to the surface of the water-soluble granular fertilizer. A layer that is present at a position closest to the water-soluble granular fertilizer and that contains the salt of the specific fatty acid and the wax is formed by the step 2a and the step 3 described later. For example, when the coated fertilizer 1 of FIG. 1 is produced by the method 1 including the step 2a, the first layer L1 becomes a layer containing the salt of the specific fatty acid and the wax.

(Specific Fatty Acid)

As the specific fatty acid, a fatty acid having 20 or more carbon atoms which can form the salt of the specific fatty acid described above and which is liquid at the coating temperature may be used. A fatty acid having 21 or more carbon atoms is preferably contained, and a fatty acid having 31 or more carbon atoms is more preferably contained. The upper limit of the carbon atom number of the specific fatty acid is not particularly limited but may be, for example, 100 or less.

The specific fatty acid may be a monobasic acid, a dibasic acid, or a tribasic acid but preferably contains at least one of a dibasic acid and a tribasic acid.

The specific fatty acid preferably contains at least one of a dimer acid and a trimer acid.

The specific fatty acid preferably contains a fatty acid having at least one of a branched structure and a ring structure.

The specific fatty acid may be a saturated fatty acid or an unsaturated fatty acid.

The specific fatty acid is preferably an aliphatic carboxylic acid having 20 or more carbon atoms.

The specific fatty acid is preferably a vegetable fatty acid having 20 or more carbon atoms.

As the specific fatty acid as described above, a known saturated fatty acid or conjugated fatty acid having 20 or more carbon atoms can be suitably used. Moreover, a commercially available product may be used, or the specific fatty acid may be synthesized by a known method. Specific examples of the specific fatty acid as described above include SB-20, IPU-22, and IPS-22 (all manufactured by Okamura Oil Mill, Ltd.), cyclocarboxypropyloleic acid (manufactured by ALFA chemistry), and Tsunodym 205 and Tsunodym 346 (both manufactured by Tsuno Oleochemicals Co., Ltd.) as commercially available products. In the case of a vegetable fatty acid, examples thereof include those obtained by modifying oleic acid, linoleic acid, linolenic acid, erucic acid, dehydrated condensed castor oil fatty acid, and the like to have 20 or more carbon atoms, and those obtained by forming them into a dimer or a trimer.

(Step 3)

The step 3 will be described.

In the step 3, by supplying a metal hydroxide into the coating apparatus and reacting the specific fatty acid with the metal hydroxide, the salt of the specific fatty acid is produced, and a layer containing the salt of the specific fatty acid and the wax is formed.

When supplied into the coating apparatus in the step 3, the metal hydroxide is preferably powder. In the case of powder, the water content and the particle shape are preferably adjusted to such an extent that the reactivity between the specific fatty acid and the metal hydroxide is not impaired. For example, when the total mass of the specific fatty acid and the wax used in the step 2 and the metal hydroxide used in the step 3 is regarded as 100 in the coating apparatus before the reaction between the specific fatty acid and the metal hydroxide, water may be contained in the range of 50% by mass or less, and more preferably 0.1 to 30% by mass.

When the step 3 is performed, the water-soluble granular fertilizer is desirably maintained in the rolling state or the flowing state. Moreover, when the step 3 is performed, as in the step 1, heating is preferably performed in order to maintain the inside of the apparatus at the coating temperature.

The method for supplying the metal hydroxide is not particularly limited. For example, when the metal hydroxide is liquid, examples thereof include a spraying method and a dropping method as in the step 2, and when the metal hydroxide is solid, examples thereof include a method of mechanically supplying while dispersing (mechanical type), and a method of supplying together with gas (air flow type), but the method is not limited thereto.

For supplying, the entire amount may be supplied at one time, or the metal hydroxide may be sequentially supplied over a predetermined time. In addition, the metal hydroxide may be divided and supplied at predetermined time intervals.

(Metal Hydroxide)

The metal hydroxide preferably contains at least one of a hydroxide of an alkali metal and a hydroxide of an alkaline earth metal, and more preferably contains at least one selected from the group consisting of sodium hydroxide, potassium hydroxide, lithium hydroxide, calcium hydroxide, and magnesium hydroxide. As described above, calcium hydroxide is further preferably used because the reaction with the specific fatty acid is good.

Regarding the mass of the metal hydroxide used in the step 3 and the mass of the specific fatty acid used in the step 2, (the mass of the metal hydroxide/the mass of the specific fatty acid) is preferably 10/1 to 0.5/1, and more preferably 5/1 to 1/1.

After the step 3, the step 2 and the step 3 are preferably further performed each once or more.

It is preferable that four cycles or more are performed, in which the each cycle including the step 2 and step 3 performed once in this order. For example, when the coated fertilizer 1 of FIG. 1 is produced by the method 1 including performing four cycles, where one cycle includes performing the step 2 and the step 3 in this order each once, the first layer L1, the second layer L2, the third layer L3, and the fourth layer L4 all become layers containing the salt of the specific fatty acid and the wax.

In addition, in the method 1 as well, at least one of the step a and the step b of the method 2 may be performed once or more after the step 1 as long as various properties such as the blocking defect rate and the yield rate are not significantly affected.

Next, the method 2 will be described.

The step 1 is the same as the step 1 of the method 1 described above.

(Step a)

The step a will be described.

In the step a, by supplying a specific fatty acid and a metal hydroxide into the coating apparatus and reacting the specific fatty acid with the metal hydroxide, the salt of the specific fatty acid is produced, and the layer A is formed. The layer A is one of the layers constituting the coating film. By the step a, the layer A having the salt of the specific fatty acid is formed on the water-soluble granular fertilizer in a flowing state or a rolling state.

When supplied into the coating apparatus in the step a, the specific fatty acid is preferably liquid.

When the step a is performed, the water-soluble granular fertilizer is preferably maintained in the rolling state or the flowing state. Moreover, when the step a is performed, as in the step 1, heating is preferably performed in order to maintain the inside of the apparatus at the coating temperature.

The method for supplying the specific fatty acid and the method for supplying the metal hydroxide may be the same as those in the step 2 and the step 3 described above. When the metal hydroxide is powder, the water content and the particle shape are preferably adjusted to such an extent that the reactivity between the specific fatty acid and the metal hydroxide is not impaired. For example, when the total mass of the specific fatty acid and the metal hydroxide used in the step a is regarded as 100 in the coating apparatus before the reaction between the specific fatty acid and the metal hydroxide, water may be contained in the range of 60% by mass or less, and more preferably 0.2 to 40% by mass.

The specific fatty acid and the metal hydroxide may be each independently supplied. When each independently supplied, the specific fatty acid and the metal hydroxide may be supplied at the same timing, supplied sequentially, or supplied at different timings of starting supplying and a part thereof may be supplied simultaneously. From the viewpoint of ease of coating, the supply of the metal hydroxide is preferably started at least after the supply of the specific fatty acid is started.

The specific fatty acid and the metal hydroxide are as described above.

(Step b)

The step b will be described.

In the step b, by supplying a wax and the metal hydroxide into the coating apparatus and solidifying the wax, the layer B is formed on the surface of the layer A.

When supplied into the coating apparatus in the step b, the wax is preferably liquid.

When the step b is performed, the water-soluble granular fertilizer is preferably maintained in the rolling state or the flowing state. Moreover, when the step b is performed, as in the step 1, heating is preferably performed in order to maintain the inside of the apparatus at the coating temperature.

The method for supplying the wax may be the same as that in the step 3 described above.

The method for supplying the metal hydroxide may be the same as that in the step a described above.

The wax and the metal hydroxide may be each independently supplied. When each independently supplied, the wax and the metal hydroxide may be supplied at the same timing, supplied sequentially, or supplied at different timings of starting supplying and a part thereof may be supplied simultaneously. From the viewpoint of ease of coating, the supply of the metal hydroxide is preferably started at least after the supply of the wax is started.

The wax and the metal hydroxide are as described above.

After the step b, the step a and the step b are preferably further performed each once or more.

It is preferable that four cycles or more are performed, in which the each cycle including the step a and the step b performed once in this order. For example, when the coated fertilizer 1 of FIG. 1 is produced by the method 2 including performing two cycles, where one cycle includes performing the step a and the step b in this order each once, the first layer L1 and the third layer L3 become layers containing the salt of the specific fatty acid (layers A), and the second layer L2 and the fourth layer L4 become layers containing the wax (layers B).

In the method 2, at least one of the step 2 and the step 3 of the method 1 may be performed once or more after the step 1.

After the method 1 and the method 2, the surface of the coating film may be dried, or the reaction of the unreacted specific fatty acid may be promoted while further maintaining the rolling state or the flowing state. In addition, the heating in the coating apparatus may be stopped at this point to decrease the temperature to a desired temperature.

[4. Composition for Coating Fertilizer]

Hereinafter, the composition for coating a fertilizer of the present disclosure will be described.

The composition for coating a fertilizer of the present disclosure contains a salt of a fatty acid having 20 or more carbon atoms and a wax. The salt of the fatty acid having 20 or more carbon atoms (the salt of the specific fatty acid) and the wax are as described above.

A preferable embodiment of the composition for coating a fertilizer is a coating film covering a fertilizer, and a coating film covering a surface of a water-soluble granular fertilizer is particularly preferable.

[5. Measurement Methods and Evaluation Methods]

The measurement methods and the evaluation methods of the evaluation items for the coated fertilizer are shown below.

The yield rate and the initial elution of a coated fertilizer in a mixed fertilizer produced by mixing a coated fertilizer and another fertilizer are also the same as described below.

(Blocking Defect Rate)

About 15 g of particles are randomly extracted from the produced coated fertilizer, and the entire mass is measured. Next, the blocking particles are removed from the extracted particles, and the total mass of the blocking particles is measured. The ratio (% by mass) of the total mass of the blocking particles to the entire mass is calculated from the obtained values to obtain the blocking defect rate.

(Yield Rate)

About 10 g of particles are randomly extracted from the produced coated fertilizer, and the entire mass is measured. Next, the extracted particles are put into 150 ml of ion-exchanged water, and ultrasonic vibration is applied for five minutes using an ultrasonic cleaner. Thereafter, undissolved coated fertilizer is selected and dried at 60°C for two hours or more, and then the mass is measured. The ratio (% by mass) of the total mass of the undissolved coated fertilizer to the entire mass is calculated from the obtained values to obtain the yield rate.

(Elution Rate)

In the present specification, the elution rate of the fertilizing component of the water-soluble granular fertilizer is obtained by measuring the mass of the eluted fertilizing component after predetermined days have elapsed by the following elution test and calculating the ratio to the mass of the fertilizing component before the start of the elution test. First, 12.5 g of the reduced coated fertilizer is taken, put into 250 ml of ion-exchanged water and stored in a thermostatic chamber at 25°C. Next, after predetermined days have elapsed, the coated fertilizer is taken out, the fertilizing component eluted in water is quantified, and the elution rate is calculated. When the fertilizing component is urea, the above quantification is performed using a total nitrogen analyzer.

(Fertilizer Moisture Permeability)

About 10 g of particles are randomly extracted from the coated fertilizer coated with urea, and the entire mass is measured. Next, the extracted particles are left to stand in a thermo hygrostat chamber at 40°C and a relative humidity of 90% RH. After 24 hours have elapsed, the coated fertilizer is taken out, and the entire mass is measured. The fertilizer moisture permeability is calculated from the obtained values and the surface area of the coated fertilizer.

(Hardness)

The hardness of the coated fertilizer of the present disclosure is not particularly limited and may be, for example, 1 to 10 kgf or 3 to 8 kgf.

(Angle of Repose)

The angle of repose of the coated fertilizer of the present disclosure is not particularly limited and may be, for example, 20 to 40° or 30 to 40°.

(Bulk Density)

The loose bulk density of the coated fertilizer of the present disclosure is not particularly limited and may be, for example, 0.1 to 2 $g/cm^3$ or 0.5 to 1.5 $g/cm^3$.
The tapped density of the coated fertilizer of the present disclosure is not particularly limited and may be, for example, 0.1 to 2 $g/cm^3$ or 0.5 to 1.5 $g/cm^3$.

EXAMPLE

Examples of the present disclosure will be described below. Note that the present disclosure is not limited to the following Examples.

[Materials Used]

The materials used for preparing the coated fertilizers of the Examples and the Comparative Examples will be described.

<Water-Soluble Granular Fertilizer>

Urea having a particle size of 2.0 mm to 4.0 mm was used.

<Specific Fatty Acid 1>

Cyclocarboxypropyloleic acid (containing an acrylic acid adduct of linoleic acid (a dimer acid having a ring structure (having 21 carbon atoms)) most abundantly) manufactured by ALFA chemistry was used.

<Specific Fatty Acid 2>

Tsunodym 205 (containing a dimer acid of an unsaturated fatty acid having a branched structure (having 36 carbon atoms) most abundantly) manufactured by Tsuno Oleochemicals Co., Ltd. was used.

<Specific Fatty Acid 3>

Tsunodym 346 (containing a trimer acid of an unsaturated fatty acid having a branched structure (having 54 carbon atoms) most abundantly) manufactured by Tsuno Oleochemicals Co., Ltd. was used.

<C18 Fatty Acid>

TFA-45 (containing a monomer of an unsaturated fatty acid having a linear structure (having 18 carbon atoms) most abundantly) manufactured by Tsuno Oleochemicals Co., Ltd. was used.

<C10 Fatty Acid>

Sebacic acid (a dicarboxylic acid having 10 carbon atoms) was used.

<Wax>

Paraffin wax (melting point; 50°C) manufactured by NIPPON SEIRO CO., LTD. was used.

<Metal Hydroxide>

Fine particle slaked lime M-300 manufactured by INOUE MITSUKICHI Co., Ltd was used.

[Example 1]

In Example 1, a coated fertilizer was produced by the method 1 described above, as will be described in detail below.
The water-soluble granular fertilizer (250 g) was charged to a drum-type rolling coating apparatus having a diameter of 300 mm, and the temperature in the coating apparatus was maintained at 70°C by a hot air generator while rolling at 25 rpm (rotations per minute) (step 1).
Next, while maintaining the rolling state, a liquid obtained by mixing the specific fatty acid 1 (0.67 g) and the wax (0.33 g) was prepared and added dropwise from the supply port into the apparatus (step 2a).
Next, while maintaining the rolling state, the metal hydroxide (2.40 g) was supplied into the apparatus after three minutes, and the rolling state was maintained for three minutes (step 3). By the step 3, the metal hydroxide and the specific fatty acid reacted to form a solidified layer on the surface of the water-soluble granular fertilizer.
Next, the following as one cycle was repeated 13 cycles.
(One Cycle) While maintaining the rolling state, a liquid obtained by mixing the specific fatty acid 1 (0.67 g) and the wax (0.33 g) was added dropwise from the supply port into the apparatus (step 2). The metal hydroxide (2.40 g) was supplied into the apparatus after three minutes, and the rolling state was maintained for three minutes (step 3).
Next, after rolling for six minutes, by gradually cooling to room temperature (about 25°C), a coated fertilizer was obtained.

[Example 2]

In Example 2, a coated fertilizer was produced by the method 2 described above, as will be described in detail below.

The water-soluble granular fertilizer (250 g) was charged to a drum-type rolling coating apparatus having a diameter of 300 mm, and the temperature in the coating apparatus was maintained at 70°C by a hot air generator while rolling at 25 rpm (rotations per minute) (step 1).

Next, while maintaining the rolling state, the specific fatty acid 1 (0.67 g) and the metal hydroxide (2.29 g) were each prepared. The specific fatty acid 1 was added dropwise from the supply port into the apparatus, and after rolling for three minutes, the metal hydroxide was introduced from another supply port. The rolling state was maintained for three minutes to obtain a layer A (step a).

Next, while maintaining the rolling state, the wax (0.33 g) was added dropwise into the apparatus, and after rolling for three minutes, the metal hydroxide (0.11 g) was supplied from another supply port into the apparatus. The rolling state was maintained for three minutes to obtain a layer B (step b).

Next, the following as one cycle was repeated 13 cycles.

(One Cycle) While maintaining the rolling state, the specific fatty acid 1 (0.67 g) was added dropwise from the supply port into the apparatus, and after rolling for three minutes, the metal hydroxide (2.29 g) was introduced into the apparatus from another supply port. The rolling state was maintained for three minutes to form a layer A (step a). The wax (0.33 g) was added dropwise, and after rolling for three minutes, the metal hydroxide (0.11 g) was supplied from another supply port into the apparatus. The rolling state was maintained for three minutes to obtain a layer B (step b).

Next, after rolling for six minutes, by gradually cooling to room temperature (about 25°C), a coated fertilizer was obtained.

[Example 3]

A coated fertilizer was obtained by the same method as in Example 1 except that the specific fatty acid 2 was used as the specific fatty acid.

Moreover, the hardness, the angle of repose, and the bulk density of the coated fertilizer of Example 3 were measured.

(Hardness)

Regarding the hardness of the coated fertilizer, 10 particles were measured using a Kiya type hardness tester, and the average value was calculated. The results are shown in Table 1 below.

[Table 1]

Table 1

| n | 1 | 2 | 3 | 4 | 5 | 6 | 7 | 8 | 9 | 10 | Average Value |
|---|---|---|---|---|---|---|---|---|---|---|---|
| Hardness (kgf) | 4.0 | 4.8 | 3.8 | 5.2 | 5.0 | 4.8 | 4.5 | 5.6 | 5.2 | 6.0 | 4.9 |

(Angle of Repose)

The angle of repose of the coated fertilizer was measured three times in accordance with "JIS R 9301-2-2: 1999 Alumina powder - Part 2: Determination of physical properties-2: Angle of repose", and the average value was calculated. The results are shown in Table 2 below.

[Table 2]

Table 2

| n | 1 | 2 | 3 | Average Value |
|---|---|---|---|---|
| Angle of Repose (°) | 32.3 | 32.8 | 32.0 | 32.3 |

(Bulk Density)

The bulk density of the coated fertilizer was measured three times in accordance with "JIS R 1628: 1997 Test methods for bulk density of fine ceramic powder", and the average value was calculated. The results are shown in Table 3 below.

[Table 3]

Table 3

| n | 1 | 2 | 3 | Average Value |
|---|---|---|---|---|
| Loose Bulk Density (g/cm$^3$) | 0.72 | 0.72 | 0.72 | 0.72 |
| Tapped Density (g/cm$^3$) | 0.77 | 0.77 | 0.77 | 0.77 |

[Example 4]

A coated fertilizer was obtained by the same method as in Example 2 except that the specific fatty acid 2 was used as the specific fatty acid.

[Example 5]

A coated fertilizer was obtained by the same method as in Example 1 except that the specific fatty acid 3 was used as the specific fatty acid.

[Comparative Example 1]

In Comparative Example 1, a coated fertilizer was produced by the method described in detail below. Although no fatty acid having 20 or more carbon atoms was used in Comparative Example 1, the terms of the method 1, the step 2a, the step 2, and the step 3 were also used in Comparative Example 1 for convenience. The same applies to Comparative Example 2 described later.
The water-soluble granular fertilizer (250 g) was charged to a drum-type rolling coating apparatus having a diameter of 300 mm, and the temperature of the particles was maintained at 70°C by a hot air generator while rolling at 25 rpm (rotations per minute) (step 1).
Next, while maintaining the rolling state, a liquid obtained by mixing the C18 fatty acid (0.67 g) and the wax (0.33 g) was prepared and added dropwise from the supply port into the apparatus (step 2a).
Next, while maintaining the rolling state, the metal hydroxide (2.40 g) was supplied into the apparatus after three minutes, and the rolling state was maintained for three minutes (step 3). By the step 3, the metal hydroxide and the C18 fatty acid reacted to form a solidified layer on the surface of the water-soluble granular fertilizer.
Next, the following as one cycle was repeated 13 cycles.
(One Cycle) While maintaining the rolling state, a liquid obtained by mixing the C18 fatty acid (0.67 g) and the wax (0.33 g) was added dropwise from the supply port into the apparatus (step 2). The metal hydroxide (2.40 g) was supplied into the apparatus after three minutes, and the rolling state was maintained for three minutes (step 3). Since agglomerates were formed after the step 2, the rolling apparatus was stopped every time an agglomerate was formed, and the rolling state was re-started after the agglomerate was crushed manually. Thus, the step 3 was performed.
Next, after rolling for six minutes, by gradually cooling to room temperature (about 25°C), a coated fertilizer was obtained.

[Comparative Example 2]

The water-soluble granular fertilizer (250 g) was charged to a drum-type rolling coating apparatus having a diameter of 300 mm, and the temperature of the particles was maintained at 70°C by a hot air generator while rolling at 25 rpm (rotations per minute) (step 1).
Next, while maintaining the rolling state, the C10 fatty acid (0.67 g) and the wax (0.33 g) were mixed, but the C10 fatty acid and the wax were not compatible with each other. Therefore, the C10 fatty acid and the wax were separately prepared and added dropwise from different supply ports into the apparatus (step 2a). However, since the C10 fatty acid was immediately crystallized in the apparatus after the dropwise addition, it was determined that the coating could not be performed, and the coating was stopped. Therefore, no coated fertilizer was obtained.

[Comparative Example 3]

The water-soluble granular fertilizer (250 g) was charged to a drum-type rolling coating apparatus having a diameter of 300 mm, and the temperature of the particles was maintained at 70°C by a hot air generator while rolling at 25 rpm (rotations per minute).

Next, while maintaining the rolling state, the specific fatty acid 2 (1.0 g) and the metal hydroxide (2.40 g) were each prepared. The specific fatty acid 2 was added dropwise from the supply port into the apparatus, and after rolling for three minutes, the metal hydroxide was introduced from another supply port. The rolling state was maintained for three minutes to obtain a layer.

Next, when the step of obtaining the above layer was repeated six times to stack the layers, blocking particles in which about two to five particles were integrated were visually observed in the particles in the rolling state. Thus, the rolling state was stopped, and the coating was stopped. The measured blocking defect rate of the obtained particles exceeded 20%.

[Measurement and Evaluation]

(Agglomerate)

The agglomerates were evaluated according to the following criteria.

A: The coated fertilizer does not become an agglomerate, the rolling state can be maintained, and crushing treatment is unnecessary.
B: The coated fertilizer becomes an agglomerate, it is difficult to maintain the rolling state, and crushing treatment is necessary.

(Blocking Defect Rate)

About 15 g of particles were randomly extracted from the produced coated fertilizer, and the entire mass was measured. Next, the blocking particles were removed from the extracted particles, and the total mass of the blocking particles was measured. The ratio (% by mass) of the total mass of the blocking particles to the entire mass was calculated from the obtained values to obtain the blocking defect rate.

(Yield Rate)

About 10 g of particles were randomly extracted from the produced coated fertilizer, and the entire mass was measured. Next, the extracted particles were put into 150 ml of ion-exchanged water, and ultrasonic vibration was applied for five minutes using an ultrasonic cleaner. Thereafter, undissolved coated fertilizer was selected and dried at 60°C for two hours or more, and then the mass was measured. The ratio (% by mass) of the total mass of the undissolved coated fertilizer to the entire mass was calculated from the obtained values to obtain the yield rate.

(Initial Elution)

From the reduced coated fertilizer, 12.5 g was taken, put into 250 ml of ion-exchanged water and stored in a thermostatic chamber at 25°C. Next, after three days elapsed, the coated fertilizer was taken out, the fertilizing component eluted in water was quantified, and the elution rate was calculated. The above quantification was performed using a total nitrogen analyzer.

Evaluation was performed according to the following criteria.

A: The elution rate from the start of elution for three days is less than 10%.
B: The elution rate from the start of elution for three days is 10% or more and less than 40%.
C: The elution rate from the start of elution for three days is 40% or more and less than 70%.
D: The elution rate from the start of elution for three days is 70% or more.

(80% Elution)

From the reduced coated fertilizer, 12.5 g was taken, put into 250 ml of ion-exchanged water and stored in a thermostatic chamber at 25°C. Next, the fertilizing component eluted in water was quantified at every predetermined days, and the elution rate was calculated. This was performed until the elution rate reached 80% or more, and the number of days required until the elution rate reached 80% was calculated from the plot of the elution rate with respect to the number of elapsed days. The above quantification was performed using a total nitrogen analyzer.

(Fertilizer Moisture Permeability)

About 10 g of particles were randomly extracted from the produced coated fertilizer, and the entire mass was measured. Next, the extracted particles were left to stand in a thermo hygrostat chamber at 40°C and 90% RH. After 24 hours elapsed, the coated fertilizer was taken out, and the entire mass was measured. The fertilizer moisture permeability was calculated from the obtained values and the surface area of the coated fertilizer. For the surface area, a value calculated on the assumption that the coated fertilizer was a sphere having a diameter of 3 mm was used.

The results are shown in Table 4 below.

Note that "ND" in the table indicates that measurement was not performed.

[Table 4]

Table 4

| | Carbon Number of Fatty Acid | Raw Material Fatty Acid | Production Method | Number of Layers Constituting Coating Film | Agglomerate | Blocking Defect Rate (%) | Yield Rate (%) | Fertilizer Moisture Permeability 40°C, 90% RH [g/(m²·24h)] | Initial Elution | 80% Elution (days) |
|---|---|---|---|---|---|---|---|---|---|---|
| Example 1 | 21 | Specific Fatty Acid 1 | Method 1 | 14 | A | 1.2 | 85 | 31 | C | 9 |
| Example 2 | 21 | Specific Fatty Acid 1 | Method 2 | 28 | A | 7.5 | 52 | 54 | D | 3 |
| Example 3 | 36 | Specific Fatty Acid 2 | Method 1 | 14 | A | 6.6 | 97 | 0.61 | A | 123 |
| Example 4 | 36 | Specific Fatty Acid 2 | Method 2 | 28 | A | 8.4 | 82 | 56 | C | 30 |
| Example 5 | 54 | Specific Fatty Acid 3 | Method 1 | 14 | A | 9.1 | 72 | 49 | B | 77 |
| Comparative Example 1 | 18 | C18 Fatty Acid | Method 1 | 14 | B | 2.6 | 45 | 130 | D | 3 |
| Comparative Example 2 | 10 | C10 Fatty Acid | Method 1 | ND | ND | ND | ND | ND | ND | ND |
| Comparative Example 3 | 36 | Specific Fatty Acid 2 | - | 7 | A | >20 | ND | ND | ND | ND |

In all the Examples, no agglomerate was observed in the production steps. Moreover, the blocking defect rates of the obtained coated fertilizers were 10% or less, and it was found that a layering defect did not occur. The yield rates of the coated fertilizers were 52% or more.

On the other hand, in Comparative Example 1, which contained a fatty acid salt having 18 carbon atoms most abundantly as the fatty acid salt, an agglomerate was generated every time the coating material of the next layer was supplied. When sebacic acid having 10 carbon atoms was used as the fatty acid, the fatty acid was not compatible with the wax, and the fatty acid was crystallized immediately after the supply. It was thus decided not to perform the coating itself. In Comparative Example 3, in which no wax was used, a large amount of blocking particles were observed at the time of forming the seventh layer, and it was found that a layering defect occurred.

As described above, the coated fertilizer of the present disclosure can suppress a layering defect. In addition, since the number of stacked layers and the coating rate are more likely to be increased, further improvement of the yield rate, the fertilizer moisture permeability, and the initial elution can be expected.

In addition, it was found that Examples 3 to 5, in which a salt of a fatty acid having 31 or more carbon atoms was contained in the coating film, had a yield rate of 72% or more and could suppress the initial elution to A (less than 10%), B (10% or more and less than 40%), or (40% or more and less than 70%). Further, in Examples 3 and 5 obtained using the method 1, the initial elution was A or B. In addition, it was found that the number of days required until the elution rate reached 80% exceeded 70 days in Examples 3 and 5.

In Examples 1, 3, and 5 obtained by the method 1, the fertilizer moisture permeability values were 49 g/(m$^2$·24 h) or less. When Example 2 (the specific fatty acid of the raw material was the same as that of Example 1) and Example 4 (the specific fatty acid of the raw material was the same as that of Example 3), which were obtained by the method 2, were compared with Example 1 and Example 3, which were obtained by the method 1, respectively, it was found that when the specific fatty acids serving as the raw materials were the same, the coated fertilizers obtained by the method 1 had a suppressed blocking defect rate, an improved yield rate, suppressed fertilizer moisture permeability, and suppressed initial elution. In addition, the times required for the film formation of the coating film of the method 1 in Examples 1, 3, and 5 were about 90 minutes, and the times required for the film formation of the coating film of the method 2 in Examples 2 and 4 were about 174 minutes. It was thus found that the method 1 could shorten the film formation time.

[Production of Mixed Fertilizer]

A mixed fertilizer was produced by mixing at a mass ratio of the coated fertilizer of Example 3/another fertilizer = 3/7 with a biaxial roller at a rotation speed of 100 rpm for 10 minutes. As the other fertilizer, specifically, "Granular Compound No. 888" (Central Chemical Co., Ltd.), "Kumiai Nitrogen Potash Compound C-26" (Central Chemical Co., Ltd.), "Magnesium Potassium Chloride Ammonium Phosphate 532" (Central Chemical Co., Ltd.), and magnesium ammonium phosphate (Central Chemical Co., Ltd.) were used.

When the produced mixed fertilizers were observed, the coated fertilizers and the other fertilizers were sufficiently mixed.

The coated fertilizers were extracted from the produced mixed fertilizers, and the yield rates and the initial elution were measured and evaluated by the methods described above. The results are shown in Table 5 below.

[Table 5]

Table 5

| Other Fertilizer | | Yield Rate (%) | Initial Elution |
|---|---|---|---|
| Type | Hardness (kgf) | | |
| Granular Compound No. 888 | 1.8 | 97 | A |
| Kumiai Nitrogen Potash Compound C-26 | 3.9 | 97 | A |
| Magnesium Potassium Chloride Ammonium Phosphate 532 | 7.7 | 97 | A |
| Magnesium Ammonium Phosphate | 9.2 | 97 | A |

From the results shown in Table 5, it was found that even when the coated fertilizer of Example 3 was mixed with other fertilizers having various hardnesses to obtain mixed fertilizers, the yield rate was high, and the initial elution could be suppressed to A (less than 10%).

INDUSTRIAL APPLICABILITY

According to the present disclosure, a coated fertilizer in which layering failure is suppressed can be provided.

Although the present disclosure has been explained in detail and referring to specific embodiments, it will be apparent to a person skilled in the art that various changes and modifications can be made without departing from the spirit and the scope of the present disclosure.

The present application is based on a Japanese Patent Application (No. 2023-74671) filed on April 28, 2023 and a Japanese Patent Application (No. 2023-99249) filed on June 16, 2023, the contents of which are incorporated herein by reference.

**Claims**

1.  A coated fertilizer comprising:

    a water-soluble granular fertilizer and a coating film covering the water-soluble granular fertilizer,
    wherein the coating film contains a salt of a fatty acid having 20 or more carbon atoms and a wax.

2.  The coated fertilizer according to claim 1, wherein the salt of the fatty acid contains a salt of a fatty acid having 31 or more carbon atoms.

3.  The coated fertilizer according to claim 1 or 2, wherein the salt of the fatty acid contains at least one of a salt of a dimer acid and a salt of a trimer acid.

4.  The coated fertilizer according to claim 1 or 2, wherein the salt of the fatty acid contains a salt of a fatty acid having at least one of a branched structure and a ring structure.

5.  The coated fertilizer according to claim 1 or 2, wherein the wax contains at least one of a petroleum-based wax or a plant-based wax.

6.  The coated fertilizer according to claim 1 or 2, wherein the coating film includes at least one layer and includes at least one layer containing the salt of the fatty acid and the wax.

7.  The coated fertilizer according to claim 1 or 2, wherein the coating film includes at least one layer and contains the salt of the fatty acid and the wax in a layer present at a position closest to the water-soluble granular fertilizer.

8.  The coated fertilizer according to claim 1 or 2, wherein the coating film includes at least four layers and includes at least four layers containing the salt of the fatty acid and the wax.

9.  The coated fertilizer according to claim 1 or 2, wherein fertilizer moisture permeability of the coating film at 40°C is 52 $g/(m^2 \cdot 24\ h)$ or less.

10. The coated fertilizer according to claim 1 or 2, wherein the coating film does not contain a resin.

11. A method for producing a coated fertilizer containing a water-soluble granular fertilizer and a coating film covering the water-soluble granular fertilizer, the method comprising:
    forming a coating film containing a salt of a fatty acid having 20 or more carbon atoms and a wax on the water-soluble granular fertilizer.

12. The method for producing a coated fertilizer according to claim 11, wherein the coating film has at least one layer containing the salt of the fatty acid and the wax, and the following steps 1 to 3 are performed in this order:

    step 1: a step of bringing the water-soluble granular fertilizer into a flowing state or a rolling state in a coating apparatus;
    step 2: a step of supplying the fatty acid having 20 or more carbon atoms and the wax into the coating apparatus; and
    step 3: a step of supplying a metal hydroxide into the coating apparatus, allowing to react the fatty acid with the metal hydroxide to produce the salt of the fatty acid having 20 or more carbon atoms and forming a layer containing the salt of the fatty acid and the wax.

13. The method for producing a coated fertilizer according to claim 12, in which the step 2 and step 3 are each repeated once or more after completing the step 3.

14. The method for producing a coated fertilizer according to claim 12 or 13, wherein the step 2 includes a step 2a of supplying the fatty acid and the wax to a surface of the water-soluble granular fertilizer.

15. The method for producing a coated fertilizer according to claim 12 or 13, wherein four cycles or more are performed, each cycle including the step 2 and step 3 performed once in this order.

16. The method for producing a coated fertilizer according to claim 12 or 13, wherein the fatty acid contains a fatty acid having 31 or more carbon atoms.

17. The method for producing a coated fertilizer according to claim 12 or 13, wherein the fatty acid contains at least one of a dimer acid or a trimer acid.

18. A composition for coating a fertilizer, the composition comprising:

    a salt of a fatty acid having 20 or more carbon atoms; and
    a wax.

19. The composition for coating a fertilizer according to claim 18, wherein the salt of the fatty acid contains a salt of a fatty acid having 31 or more carbon atoms.

20. The composition for coating a fertilizer according to claim 18 or 19, wherein the salt of the fatty acid contains at least one of a salt of a dimer acid or a salt of a trimer acid.

21. A mixed fertilizer comprising:

    the coated fertilizer according to claim 1 or 2; and
    another fertilizer.

22. The mixed fertilizer according to claim 21, wherein the other fertilizer is at least one selected from the group consisting of a high-grade complex fertilizer, a nitrogen fertilizer, a phosphate fertilizer, a potash fertilizer, an organic fertilizer, a silicate fertilizer, and a magnesium fertilizer.

FIG.1

## INTERNATIONAL SEARCH REPORT

| International application No. |
|---|
| **PCT/JP2024/016020** |

**A.    CLASSIFICATION OF SUBJECT MATTER**

*C05G 5/30*(2020.01)i; *B01J 2/00*(2006.01)i; *B01J 2/30*(2006.01)i; *C05F 11/00*(2006.01)i; *C05G 3/00*(2020.01)i
FI:    C05G5/30; C05G3/00; C05F11/00; B01J2/00 B; B01J2/00 C; B01J2/30

According to International Patent Classification (IPC) or to both national classification and IPC

**B.    FIELDS SEARCHED**

Minimum documentation searched (classification system followed by classification symbols)

C05G5/30; B01J2/00; B01J2/30; C05F11/00; C05G3/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2009-242195 A (CHISSO ASAHI FERTILIZER CO., LTD.) 22 October 2009 (2009-10-22) claims 1-2, paragraphs [0001], [0014], [0021], [0023], [0031], [0032], [0035], [0040], [0053]-[0055] | 1, 5-11, 18 |
| Y | | 21-22 |
| A | | 2-4, 12-17, 19-20 |
| Y | JP 2019-156681 A (JCAM AGRI CO., LTD.) 19 September 2019 (2019-09-19) claims 1, 10, paragraph [0073] | 21-22 |
| A | JP 2007-084414 A (MITSUI TOUATSU HIRYO K.K.) 05 April 2007 (2007-04-05) entire text | 1-22 |
| A | CN 111423281 A (BEIJING ACADEMY OF AGRICULTURE AND FORESTRY SCIENCES) 17 July 2020 (2020-07-17) entire text | 1-22 |

☐ Further documents are listed in the continuation of Box C.      ☑ See patent family annex.

| | |
|---|---|
| *     Special categories of cited documents: | "T"    later document published after the international filing date or priority date and not in conflict with the application but cited to understand the principle or theory underlying the invention |
| "A"    document defining the general state of the art which is not considered to be of particular relevance | |
| "D"    document cited by the applicant in the international application | "X"    document of particular relevance; the claimed invention cannot be considered novel or cannot be considered to involve an inventive step when the document is taken alone |
| "E"    earlier application or patent but published on or after the international filing date | |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **11 July 2024** | **30 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/016020**

| Patent document cited in search report | | | Publication date (day/month/year) | Patent family member(s) | Publication date (day/month/year) |
|---|---|---|---|---|---|
| JP | 2009-242195 | A | 22 October 2009 | (Family: none) | |
| JP | 2019-156681 | A | 19 September 2019 | (Family: none) | |
| JP | 2007-084414 | A | 05 April 2007 | (Family: none) | |
| CN | 111423281 | A | 17 July 2020 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019156681 A
- JP 2007084414 A
- JP 2023074671 A
- JP 2023099249 A

**Non-patent literature cited in the description**

- **EBTISAM K. HEIKAL** ; **SALAH A. KHALIL**. Coating Potassium Nitrate and Urea Fertilizers by some Organic and Inorganic Materials to Improve their Dissolution and Releasing Characteristics. *AMSE JOURNALS -2015-Series*, vol. 76 (1), 33-45